(19) **Europäisches Patentamt**
**European Patent Office**
**Office européen des brevets**

(11) **EP 2 350 613 B1**

(12) **EUROPEAN PATENT SPECIFICATION**

(45) Date of publication and mention
of the grant of the patent:
**06.05.2015 Bulletin 2015/19**

(21) Application number: **09783713.2**

(22) Date of filing: **02.10.2009**

(51) Int Cl.:
***G01N 21/25*** (2006.01)  ***B01F 11/00*** (2006.01)
***B01F 15/00*** (2006.01)

(86) International application number:
**PCT/EP2009/062858**

(87) International publication number:
**WO 2010/037862 (08.04.2010 Gazette 2010/14)**

(54) **AN APPARATUS AND A METHOD FOR INVESTIGATION OF MICROTITER PLATES SUBJECTED TO ORBITAL SHAKING**

VORRICHTUNG UND VERFAHREN ZUR UNTERSUCHUNG VON MIKROTITERPLATTEN UNTER EINWIRKUNG EINES ORBITALSCHÜTTLERS

APPAREIL ET PROCÉDÉ PERMETTANT L'EXAMEN DE PLAQUES DE MICROTITRATION SOUMISES À UNE AGITATION ORBITALE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.10.2008 NL 2002055**

(43) Date of publication of application:
**03.08.2011 Bulletin 2011/31**

(73) Proprietor: **Enzyscreen B.V.**
**2031 ER Haarlem (NL)**

(72) Inventor: **DUETZ, Wouter Adriaan**
**NL-2102 BJ Heemstede (NL)**

(74) Representative: **Jansen, Cornelis Marinus**
**V.O.**
**Johan de Wittlaan 7**
**2517 JR Den Haag (NL)**

(56) References cited:
**US-A1- 2002 168 784    US-A1- 2004 106 201**
**US-A1- 2007 256 510    US-B2- 6 673 532**

## Description

FIELD

The invention relates to an apparatus and a method for investigating progression of microbial and cell growth in microtiter plates subjected to orbital shaking. The invention further relates to a computer program for enabling investigation of microtiter plates.

BACKGROUND OF THE INVENTION

When working with relatively large numbers of strains or mutant libraries, use of the standard microtiter plate format (with 24 or 96 wells of 0.2 to 11 ml) is attractive because of the availability of compatible robots, multipipettes, readers, and other equipment. Use of microtiter plates for the cultivation of microorganisms has developed rapidly in the last decade, to such an extent that they now are a mature alternative to traditional cultivation vessels such as Erlenmeyer shake flasks, see, for example Duetz, W.A. "Microtiter plates as mini-bioreactors: miniaturization of fermentation methods", TRENDS in Microbiology 2007, 15 (10): 470 - 475. Especially, development of a "sandwich cover" clamped on top of the microtiter plate has been of large importance as it allows the vigorous orbital shaking (at centrifugal forces up to 2.5) in the absence of spilling of the culture fluid or occurrence of cross-contamination between wells. This vigorous orbital shaking is often necessary for sufficient mixing and oxygen supply into the microbial cultures. The small culture volumes in microtiter plates (generally in the range of 0.1-4 ml) allow a large cost saving in terms of amount of culture medium required as well as the number of orbital shakers required for their simultaneous cultivation. However, the disadvantage of small culture volumes is that sample volumes taken from such cultures (e.g. for the determination of the density of the culture) must be extremely small as well, often too small for reliable measurements. Therefore, there is an increasing need for non-invasive techniques to determine the cell densities is such cultures.

The main presently used non-invasive technique to determine cell densities is based on capability of cells to scatter (change the direction of) visible light, increasingly so at higher cell densities. When an individual microbial cell in a suspended culture is hit by light in the visual area, it will change the direction of this light in a largely random way. This process is commonly referred to as "light scattering" and is caused by a combination of reflection on the cell surface and refraction when the light is not reflected on the surface but travels through the cell and its cytoplasm. This principle of light scattering by cell suspensions has been used for the quantification of cell densities for many decades, mainly by measuring the percentage of transmission of light (often in the area between 500 and 650 nm) through a culture. This method is usually referred to as "optical density measurements" and has also been applied as well for microbial cultures in microtiter plates and similar arrays of wells by various suppliers of per se known laboratory equipment.

In addition to light transmission determinations, measuring the amount of light that is reflected by the culture (typically under angles of between 135 or 180 degrees) for quantifying cell mass may be applied, as described by Mullaney and Dean "The small angle light scattering of biological cells", Biophysical Journal 10: 764-772, 1970, and Kohanovsky "The dependence of the diffuse reflection coefficient of blood on the concentration of red cells", J. Colloid and Interface Science 208: 575-577, 1998, and is also known from EP1730494. In an apparatus known from EP 1730494 a single sensor is used that measures light reflections from all wells successively while the microtiter plate is continuously shaken. The limitation of the latter method is that the (non-shaking) sensor has to be under the well (typically 6-12 mm in diameter) at all times, which - in its turn - intrinsically limits the shaking diameter to 6 mm or smaller. At such small shaking diameters (low centrifugal force) it is much more difficult to obtain sufficient oxygen transfer rates and so interruption of the shaking may cause negative effects of the cultures because of oxygen deprivation. A higher shaking frequency may be applied to compensate for such low shaking diameters (in order to obtain an identical centrifugal force), but the resulting higher speeds with which the cell cultures are forced to swirl around within the wells may cause cell damage or even cell death as a result of higher shear forces, especially if non-round (e.g. square) shaped wells are used. Another disadvantage of this approach is that no visual information can be obtained on the morphology of the cultures, especially with regard to the homogeneity of the culture and the possible presence of aggregates or clumps of cells.

SUMMARY OF THE INVENTION

It is an object of the invention to provide an apparatus for investigating the progression of eukaryotic cell or microbial growth in orbitally shaken microtiter plates with increased efficiency and, optionally, with increased accuracy.

To this end, in accordance with the invention an apparatus for investigating homogeneity of cell cultures growing in orbitally shaken microtiter plates comprises:

- a shaker arranged to orbitally shake, a plurality of wells present in the microtiter plates;
- a flatbed scanning unit conceived to generate one or more images of the bottom of said plurality of wells and
- a control unit arranged to automatically interrupt the shaker for an interrupt period by applying an interrupt signal and to cause the flatbed scanning unit to automatically generate said one or more images by means of scanning said wells during a period of said interrupt.

According to the invention due to the fact that imaging occurs during an interrupt using a flatbed scanning unit the imaging step is not compromised by the shaking. In addition, in the apparatus according to the invention a complete stop of shaking is allowable, as higher shaking diameters may be used because the imaging unit is operatively "decoupled" from the shaker and is used in pre-determined time-slots corresponding to stationary wells. It is found that higher shaking diameters result in improved oxygen concentration inside the microtiter plates which does not necessitate continuous shaking for growing cell cultures.

Document US 2004/0106201 describes an embodiment of a system for monitoring chemical reactions, wherein a reaction device conceived to accommodate a reaction medium is being shaken. In order to detect thermal radiation emitted during an exotermic reaction taking place in the reaction device, the known arrangement comprises a heat sensitive sensor, like an IR camera.

It will be appreciated that the device known from US 2004/0106201 is not suitable for investigating homogeneity of eukaryotic and microbial cells, as shaking mode usually applicable in the field of chemical reactions is not suitable for enabling cell growth. In addition, due to the fact that in the arrangement known from US 2004/0106201 a heat sensor is used, such arrangement may not be used for monitoring inhomogeneity of cell structures. Finally, due to the fact that the arrangement known from US 2004/0106201 is adapted to detect heat, which is emitted into an ambient environment in 3D, such detection is carried out without interrupting shaking. This feature make is also not compatible with the field of optical imaging.

Document US2002/0168784 describes an embodiment of a diagnostic system comprising an isolated microtiter plate conceived to comprise an agglutination reagent for generating an assay result on an agglutination assay. In order to investigate the results of the agglutination assay the microtiter plates are manually positioned on a flatbed scanner. The known system does not disclose any shaking mode and does not relate to the field of cell growing apparatus. The known system does not comprise a flatbed scanner as an integral part of a laboratory unit.

Document US 2007/0256510 describes a device for recording of process parameters of reaction fluids, wherein use is made of fluorescent dyes which are supplied into the reaction fluids. In the known device chemical reactions take place in microtiter plates which are orbitally shaken. However, in the known device use is made of a stationary light source and a stationary detector positioned below the continuously shaken wells due to the fact that only the stray light is to be measured. As a result, only wells with a very small diameter may be investigated with the known device.

Document US 6, 673, 532 describes a bioprocessing system wherein cells are cultivated wherein an excitation source is used to produce light which excites an optical chemical sensor to generate emission and/or cause absorption. The emission and/or absorption are measured by a detector. Such arrangement is not suitable for investigating inhomogeneities in cell cultures. Preferably, the shaker in the apparatus according to the invention is adapted to orbitally shake said wells with a velocity of at least 200 rpm. In general, suitable rotation speed for enabling sufficient oxygen concentration in the cell culture is between 200 rpm and 400 rpm.

In a particular embodiment of the apparatus according to the invention, the shaker is adapted to receive the wells having a diameter greater than 10mm, preferably more than 15mm. According to this feature cell cultures of increased volume may be grown.

In a still further embodiment of the apparatus according to the invention, the shaker is adapted to operate with a shaking diameter of at least 25 mm, preferably of 50 mm to 70 mm. This feature is particularly advantageous as an increased shaking diameter enforces creation of the oxygen buffer concentration in the cell cultures causing it to decrease to a non-zero value during interrupt. Accordingly, the growth process is not disrupted by the interrupt of the shaker.

Because the oxygen transfer rates obtainable at such high shaking diameters of 50 or 70 mm are very high, the cultures were found to be not oxygen-limited, and a significant concentration of dissolved oxygen was found to accumulate in the culture. This dissolved oxygen concentration was found to be able to successfully serve as an "oxygen buffer" for the time period (5-60 seconds) during which the orbital shaking may be interrupted, without any adverse effects to the cells that would have occurred if the cultures would have been deprived of oxygen is this time period.

On the contrary, in the systems known from the prior art, an interrupt of the shaking may cause negative effects on the cells, degrading their growth capacity. In the apparatus according to the invention an interrupt for generating an image of the wells is allowable without any negative effects on cell growth. Accordingly, generated images provide necessary the morphological information on the cell cultures being grown in the wells, such as homogeneity detail regarding formation of aggregates or pellets.

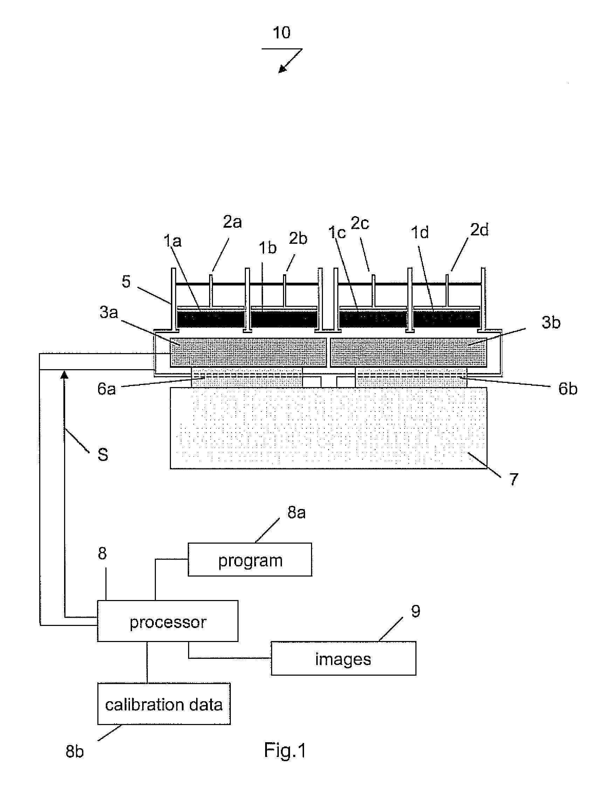

The invention is based on a further insight that in order to overcome limitations of apparatus known from the art, it is possible to apply a suitable scanning device, for example a CCD-flatbed scanner device for generating two-dimensional images of the wells present in the microtiter plates positioned in the shaker. Preferably, a CCD array used in the optical scanning device is one-dimensional. It will be appreciated that suitable commercially available flatbed-scanners may be adapted in terms of steering software, scanning area, light bundling, housing etc. for enabling mounting thereof on an orbital shaker. Preferably, the optical scanning device is arranged to generate visible light, more preferably, the optical scanning device may be arranged to generate light in a range of 400 nm - 650 nm, or even higher, for example, in the infra-red range. It will be appreciated that any other optical devices which may be adapted to enable generation of suitable two-dimensional images of well bottoms may be used. Preferably, the optical scanning device does not undergo shaking. The present invention, thus, concerns an apparatus that allows the orbital shaking of microbial or cell cultures in microtiter plates at a high shaking amplitude and frequency, and enables generation of a high resolution image of the bottom of a suitable plurality of wells of one or more microtiter plates, using an optical scanning device mounted under the microtiter plates (see Figure 1), during a short time interval during which the orbital movement is interrupted.

Preferably, the orbital shaker is combined with a rack system for mounting microtiter plates for shaking in a minimal distance above a statically attached frame of the optical scanning device.

It will further be appreciated that suitable plurality of microtiter plates may be arranged in the shaker, for example, black and white 24-, and 96- round low well microtiter plates with transparent bottoms, as known per se in the art. Preferably, a period of interrupt may be set to about 5 - 60 seconds, preferably to 10 - 40 seconds for allowing scanning of the microtiter plates using the optical scanning device, after which the shaker resumes orbitally shaking the microtiter plates. It will be appreciated that duration of the interrupt is dependent on a time necessary for a medium present in the wells to substantially come to rest and a time necessary for the optical scanning device to generate the two-dimensional images of the wells bottoms.

The operation of the apparatus according to the invention is based on the following insights. It is found that the most significant fraction of light scattered by particles and cells is refracted and reflected in the forward direction of the incident light beam. That implicates that a major part of light returning from a suspension (scattering in the opposite direction of the incident light beam) must have been refracted by various cells. Assumed that each refraction event alters the initial direction of a light beam less than 30° and all particles are randomly distributed, numerous particles are necessary for a 180° turn of the light beam. Furthermore it can be concluded that the higher the concentration of a suspension, the more evenly will be the dispersion of the fractions of each light-beams in all directions. Absorption or reflection effects at the boundaries of a suspension influence the intensity of light re-emitted from the suspension. Theoretically, this has a major impact on light-scattering measurements in non-infinite suspensions such as microtiter plate wells. Hence, the influence of the suspension filling height, vessel-diameter and color of the vessel-wall and the influence of the area of illumination was investigated in order to establish a better understanding of light-scattering phenomena in cell-suspensions and in a practical point of view to detect potential sources of error for light-scattering measurements in microtiter plates.

Preferably, in the apparatus according to the invention, the shaker frame is arranged to receive microtiter plates with dimensions of 86 x 128 mm². This has an advantage that the standard, most frequently used, mictrotiter plates may be utilized, improving usability of the apparatus according to the invention in laboratories.

In a further embodiment of the apparatus according to the invention, it further comprises a processor arranged to determine a growth-related parameter for a culture present in respective wells of said microtiter plates based on the images and pre-determined calibration data.

It is found preferable to enable the apparatus according to the invention with some analytic features, for example with features pertaining to determination of a growth-related parameter. Although the apparatus according to the invention may be arranged for storing the image data for later analysis, it is also possible to arrange the apparatus according to the invention to carry-out an on-line analysis of the growth-related parameter. Preferably for the growth-related parameter respective cell-mass concentrations are selected.

In order to avoid inaccuracies pursuant to characteristics of a microtiter array under consideration, it is preferable to provide a dedicated calibration data for each type of well of the microtiter plates to be analyzed in the apparatus.

For example, a suitable calibration data may be based on a calibration equation, comprising a suitable number of empirically determined variables, for example setting out a relation between image density and a corresponding cell-mass concentration. For example, a suitable calibration equation for the light scattering progressions may have a following analytical form:

$$f(x) = a + b(x + c)^d \text{,}$$

wherein

    f(x) is light scattering as a function of cell mass in the well,

    a, b, c, and d - are parameters, empirically determined for each combination of specific microtiter plate and type of microbial or eukaryotic cells.

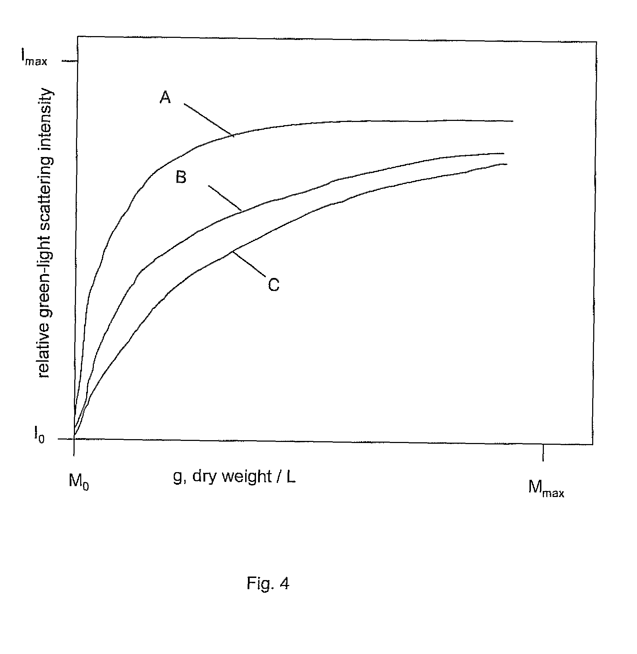

For example, the calibration curve f(x) may be different for black 24-low well microtiter plates, white 24-low well microtiter plates, grey 24-low well microtiter plates, black 96-low well microtiter plates, white 96-low well microtiter plates, and so on, see Figure 4.

It has been found that there is a good agreement between the calibration curves f(x), and the light scattering progressions demonstrated that a function of only four parameters is sufficient to establish a mathematical correlation between the image data as measured by the optical scanning device of the apparatus according to the invention and the amount of cell-mass per ml present in the microtiter plates.

Preferably, in the apparatus according to the invention the processor is arranged to select pre-determined calibration data from a plurality of pre-determined calibration data based on a type of the microtiter plates present in the shaker.

The invention further relates to the method for investigating orbitally shaken microtiter plates. Advantageous embodiments of the method according to the invention are recited in claims 16, 17 and 18.

The invention further relates to a computer program product for causing a processor to carry out the steps of the method as set forth in the foregoing.

These and other aspects of the invention will be discussed with reference to drawings. It will be appreciated that drawings are presented for illustrative purposes and may not be used to limit the scope of the appended claims.

BRIEF DESCRIPTION OF THE DRAWINGS

Figure 1 presents a schematic view of an embodiment of an apparatus according to the invention.
Figure 2 presents a schematic view of a detail of the apparatus shown in Figure 1.
Figure 3 presents a schematic view of an exemplary embodiment of images provided by the apparatus according to the invention.
Figure 4 presents in a schematic way calibration data that may be used by the apparatus of Figure 1.
Figure 5 presents an exemplary embodiment of oxygen saturation curves obtainable in the apparatus according to the invention.

DETAILED DESCRIPTION OF THE DRAWINGS

Figure 1 presents a schematic view of an embodiment of an apparatus according to the invention. The apparatus 10 comprises a housing 7 onto which respective constructive parts of the apparatus may be mounted. In accordance with the invention, suitable microtiter plates 1a, 1b, 1c, 1d comprising wells (not shown) may be arranged under respective clamp elements 2a, 2b, 2c, 2d arranged to hold the microtiter plate down to the frame 5 for preventing displacement of the microtiter plates with respect to the frame 5 during shaking. The orbital shaking is enabled by the frame 5 which is suitably driven by a motor (not shown). The motor may be adaptable with regard to the shaking velocity and shaking amplitude.

In accordance with the invention, the apparatus 10 further comprises a processor 8 conceived to interrupt the motor of the frame 5 for a suitable interrupt period by means of application of an interrupt signal, for example for 10 - 40 seconds, and to trigger suitable optical devices 3a, 3b for generating two-dimensional images of respective bottoms of the wells present in the microtiter plates 1a, 1b, 1c, 1d. Although in this embodiment two optical scanning devices are illustrated, it will be appreciated that any number of the optical scanning devices may be applicable, including a sole optical scanning device. Preferably, the optical scanning device comprises a one-dimensional array of detector elements (not shown). For the optical scanning device a flatbed scanner is used. The optical scanning devices 3a, 3b are preferably mounted on respective frames 6a, 6b for support. The frames 6a, 6b may be attached to the housing 7.

After respective scans are generated, the frame 5 resumes orbital shaking of the microtiter plates 1a, 1b, 1c, 1d. It will be appreciated that in accordance with the invention, the orbital shaking of the microtiter plates comprising wells provided with a suitable biologic material is interrupted during period of cell growth for providing intermediate data on cell-mass concentrations and/or morphology. For example, shaking amplitude may be set to 50mm and a shaking velocity may be set to 300rpm to reach oxygen transfer rates in the order of 30-40 mmol O2/L/h. At such conditions the aerobic bacterial strain *Pseudomonas putida CA-3* may reach cell densities up to 9 g (dry weight) L-1 during growth on a glucose mineral medium.

Preferably, the processor 8 may be operable using a computer program 8a which comprises suitable instructions for interrupting the shaker frame 5, for enabling the optical scanning devices 3a, 3b to generate two-dimensional images of the bottom of the wells present in the microtiter plates 1a, 1b, 1c, 1d and for resuming orbital shaking by the frame 5.

The processor may be arranged to store the acquired images in a suitable memory unit 9. Alternatively or additionally, the processor 8 may be arranged to carry-out on-line or off-line analysis of the scan data using calibration data 8b. The calibration data are provided per microtiter plate type and relate image density of two-dimensional images generated by the optical devices 3a, 3b with a growth parameter of a cell culture present in the microtiter plates. Preferably, for the growth parameter a cell-mass concentration is used.

Preferably, the apparatus 10 according to the invention is arranged to suitably modify operational parameters of the motor of the orbital shaker, causing the frame 5 to correspondingly alter the shaking mode to be applied to the microtiter plates. For example, the processor 8 may be provided with reference data corresponding to a desirable growth curve (not shown). When, based on the latest acquired two-dimensional images, it is found that the growth curve of cultures, currently present in the wells of the microtiter plates, deviates from the reference data, the shaking mode can be modified. For this purpose, the processor 8 may provide a signal S to the motor of the shaker to adapt the shaking velocity and/or the shaking amplitude. After suitable adaptations are fulfilled, orbital shaking may be resumed.

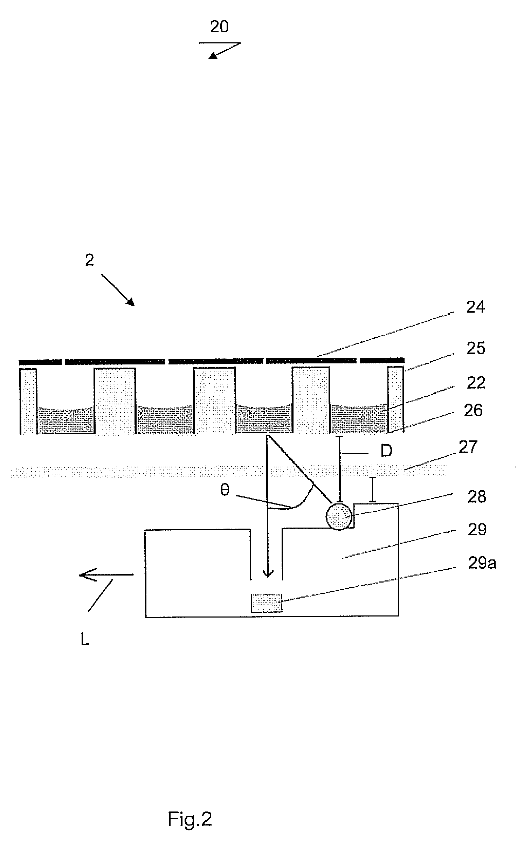

Figure 2 presents a schematic view of a detail of the apparatus shown in Figure 1. The microtiter plates 2 may comprise a cover 24, preferably a rubber cover, for limiting evaporation of a medium from culture 22 present in the wells. The microtiter plates 2 comprise walls 25 for mutually separating individual wells of the microtiter plate. Preferably, a bottom of the microtiter plate 26 is transparent for reducing loss of light generated by a light source 28 of the optical scanning device as well as loss of the reflected light and scattered light. The apparatus 20 may comprise a protective transparent plate 27 for protecting scanning elements of the optical scanning device. Preferably, the optical scanning device is mounted on a frame 29, which supports the light source 28 and a CCD element 29a, which may be a one-dimensional array. Preferably, the frame 29 is adjusted for allowing a distance D between the light source and the bottom of the wells of the microtiter plates to be as small as about 10 mm. During scanning, the optical elements 29 may be translated along a direction L and the source 28 is arranged to illuminate respective wells so that in incidence angle $\theta$ of about 30 degrees is enabled. This angle of about 30 degrees prevents direct reflections from the bottom of the microtiter plates to reach the CCD, which would take place at some spots in case a two dimensional CCD (as present in photo cameras) were applied.

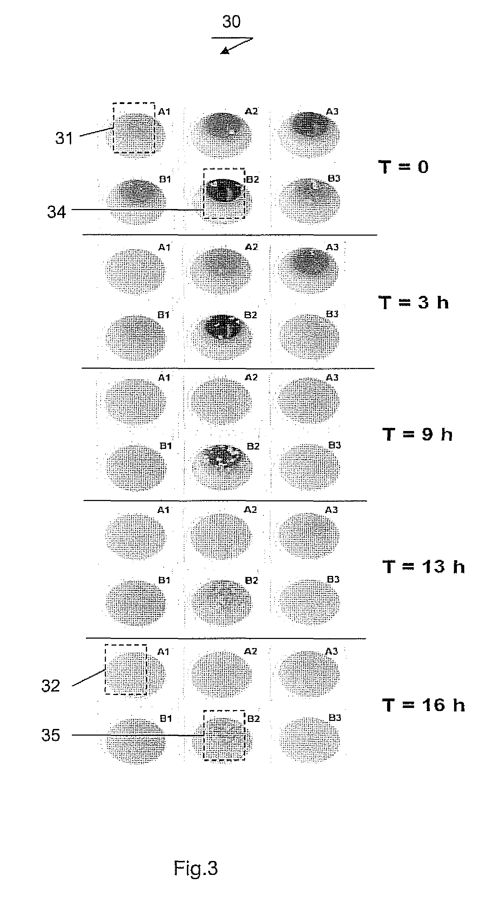

Figure 3 presents a schematic view of an exemplary embodiment of images provided by the apparatus according to the invention. Images 30 depict subsequent two-dimensional images of respective bottoms of 6 wells from a 96-well microtiter plate having wells with white walls and a transparent bottom. The images are generated at times 0, 3 hours, 9 hours, 13 hours and 16 hours. The 6 wells have been inoculated with various bacterial strains at time t = 0 into Nutrient Broth medium, and were shaken at 300 rpm, 50 mm amplitude at 30 degrees Celsius. The shaking was interrupted for 30 seconds each hour, allowing the two-dimensional images to be automatically acquired in accordance with the invention. It is clearly visible that the cell density in well A1 is gradually increasing in time, see items 31, 32, wherein the cell culture is homogeneous at all times. In contrast, the microbial strain in well B2 is growing in a non-homogeneous way, see items 34, 35; wherein image portion 35 clearly visualizes aggregates of cells. The apparatus and the method according to the invention have, next to accurate and dynamic monitoring of cell growth, an additional advantage, as information on aggregates is provided. Such information is not obtainable by the apparatus of the prior art due to technical limitations therein, notably use a single beam/sensor system.

Figure 4 presents in a schematic way calibration data that may be used by the apparatus of Figure 1. In particular, calibration curves for relating the cell density in Pseudomonas putida cell-suspensions to the green-light scattering-intensities, as measured by the optical scanning device in the centre of the wells of polystyrene 24-well microtiter plates. The calibration data, presented as calibration curves, may have measurement data on intensity of scattered light, varied between $I_0$ and $I_{max}$ for with call masses in the range of Mo and $M_{max}$. It will be appreciated that suitable selection of the range Mo - $M_{max}$ lies within skill of the artisan. It will be further appreciated that the calibration data may not be limited to measurement data, as respective curves may be fitted with a suitable analytic equation for extrapolating the calibration data beyond the measurement results. Curve A represents data for white walls of the wells, curve B represents data for grey walls of the wells, curve C represents data for black walls of the wells. It is found that microtiter plates with white walls are especially suitable to measure low densities at a high accuracy. Microtiter plates with black-walled wells are suitable for relatively high cell densities, with a relatively poor response at low cell densities. Microtiter plates with grey walls give a good accuracy at low cell densities, but also result in an well measurable increase in the green-light scattering-intensities at high cell densities.

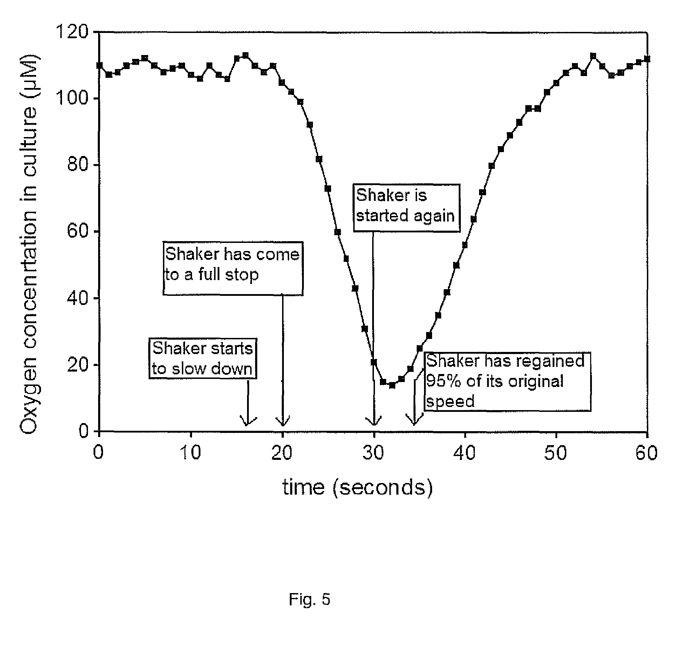

Figure 5 presents an exemplary embodiment of oxygen saturation curves obtainable in the apparatus according to the invention. Oxygen concentration of a 2 ml culture of Pseudomonas putida F1 during growth on a glucose mineral medium at a specific oxygen consumption of approx 30 mmol O2 / L.h, in a square deep well microtiter plate with 24 wells, at an orbital shaking frequency of 300 rpm and a shaking diameter of 50 mm. At t=16 s, the shaker is given a signal to stop. Subsequently, the shaker needs 4 seconds to come to a full stop (t=20). After 10 seconds the shaker is restarted. As a result of the high oxygen transfer rates during the shaking period of more than 100 $\mu$M (particularly as a result of the large shaking diameter), the culture is apparently able to accumulate a sufficient "buffer" concentration of dissolved oxygen to prevent the oxygen concentration from reaching zero during the 10 seconds of interruption. It is found that a residual oxygen concentration of about 10% with respect to the oxygen concentration during shaking is sufficient for allowing imaging during interrupt. Therefore, the interruption of the shaking does not have a negative impact on the growth of the culture (as would have occurred if the oxygen would have been completely depleted, e.g. when a smaller shaking diameter would have been applied).

It will be appreciated that while specific embodiments of the invention have been described above, that the invention may be practiced otherwise than as described. In addition, isolated features discussed with reference to different figures may be combined. In addition, although in the specification the invention is explained with reference to a 96-well microtiter plate, other microtiter plates may also be analyzed.

**Claims**

1. An apparatus (10) for investigating homogeneity of cell cultures orbitally shaken in microtiter plates, comprising:

   - a shaker arranged to orbitally shake a plurality of wells arranged in microtiter plates (1a, 1b, 1c, 1d); wherein the apparatus further comprises a flatbed scanning unit (3a, 3b) conceived to generate one or more two-dimensional images of said plurality of wells and a control unit arranged to automatically interrupt the shaker for a suitable interrupt period by applying an interrupt signal and to cause the flatbed scanning unit to automatically generate said one or more images by means of scanning said wells during said interrupt period.

2. An apparatus according to claim 1, wherein the shaker is adapted to orbitally shake said wells with a velocity of at least 200 rpm.

3. An apparatus according to claim 2, wherein the shaker is adapted to receive the wells having a diameter greater than 10mm.

4. An apparatus according to any one of the preceding claims, wherein the shaker is adapted to operate with a shaking diameter of at least 25 mm, preferably of 50 mm to 70 mm.

5. An apparatus according to any one of the preceding claims 1 - 4, wherein the control unit is arranged to interrupt the shaker for the period of 5 - 60 seconds, preferably for the period of 10 - 40 seconds.

6. An apparatus according to any one of the preceding claims, wherein the flatbed scanning unit is mounted below a bottom portion of the wells.

7. An apparatus according to claim 6, wherein a light source of the flatbed scanning unit is arranged to illuminate the bottom portions of the wells with an incidence angle of about 30 degrees from a vertical.

8. An apparatus according to any one of the preceding claim, further comprising a processor arranged to determine a growth-related parameter for a culture present in said wells based on the images and pre-determined calibration data.

9. An apparatus according to claim 8, wherein the processor is arranged to select pre-determined calibration data from a plurality of pre-determined calibration data based on a type of a microtiter plate present in the shaker.

10. An apparatus according to claim 9, wherein the processor is arranged to determine the type of the microtiter plate from the images generated by the flatbed scanning unit

11. An apparatus according to claim 9 or 10, wherein the processor is further arranged to adapt a shaking mode based on a value of the determined growth-related parameter.

12. An apparatus according to any one of the preceding claims comprising a plurality of microtiter plates provided with wells.

13. An apparatus according to any one of the preceding claim, wherein the flatbed scanning unit is arranged to generate a visible light.

14. An apparatus according to any one of the preceding claim 1 - 13, wherein the flatbed scanning unit is arranged to generate light in the range of 400 nm - 650 nm.

15. An apparatus according to claim 14, when dependent of claim 12 wherein the wells have transparent bottoms, and a wall color white, grey or black.

16. A method for investigating homogeneity of orbitally shaken wells present in microtiter plates, comprising the steps of:

   a. orbitally shaking a microtiter plate having at least one well comprising a culture conceived to be grown there within;
   b. automatically interrupting the shaking of the microtiter plate for an interrupt period by applying a control signal to a shaking unit from a control unit;
   c. automatically generating a two-dimensional image of the at least one well during said interrupt period using a flatbed scanning unit
   d. automatically resuming said shaking.

17. A method according to claim 16, further comprising the step of:

   e. analyzing said images for determining a growth-related parameter.

18. A method according to claim 17, further comprising the step of adapting a shaking mode of the microtiter plates based on a determined value of a growth-related parameter.

19. A computer program product for causing a processor to carry out the steps of a method according to claim 16, 17 or 18.

**Patentansprüche**

1. Vorrichtung (10) zur Untersuchung der Homogenität von orbital geschüttelten Zellkulturen in Mikrotiterplatten, umfassend:

   - einen Schüttler, angeordnet um mehrere in Mikrotiterplatten (1a, 1b, 1c, 1d) angeordnete Mulden orbital zu schütteln;
   wobei die Vorrichtung ferner eine Flachbett-Scaneinheit (3a, 3b) umfasst, konzipiert zur Erzeugung von einem oder mehr zweidimensionalen Bildern der mehreren Mulden, und eine Steuereinheit, angeordnet um den Schüttler durch Anwendung eines Unterbrechungssignals während eines geeigneten Unterbrechungszeitraums automatisch zu unterbrechen und um die Flachbett-Scaneinheit zu veranlassen, das Bild oder die Bilder durch Scannen der Mulden während des Unterbrechungszeitraums automatisch zu erzeugen.

2. Vorrichtung nach Anspruch 1, wobei der Schüttler geeignet ist, die Mulden orbital mit einer Geschwindigkeit von mindestens 200 U/min zu schütteln.

3. Vorrichtung nach Anspruch 2, wobei der Schüttler geeignet ist, die Mulden mit einem Durchmesser von mehr als 10 mm aufzunehmen.

4. Vorrichtung nach einem der vorhergehenden Ansprüche, wobei der Schüttler geeignet ist, um mit einem Schütteldurchmesser von mindestens 25 mm, bevorzugt 50 mm bis 70 mm, zu arbeiten.

5. Vorrichtung nach einem der vorhergehenden Ansprüche 1 bis 4, wobei die Steuereinheit angeordnet ist, um den Schüttler während des Zeitraums von 5-60 Sekunden, bevorzugt während des Zeitraums von 10-40 Sekunden, zu unterbrechen.

6. Vorrichtung nach einem der vorhergehenden Ansprüche, wobei die Flachbett-Scaneinheit unter einem Bodenabschnitt der Mulden montiert ist.

7. Vorrichtung nach Anspruch 6, wobei eine Lichtquelle der Flachbett-Scaneinheit angeordnet ist, die Bodenabschnitte der Mulden mit einem Neigungswinkel von ungefähr 30 Grad von einer Senkrechten zu beleuchten.

8. Vorrichtung nach einem der vorhergehenden Ansprüche, ferner umfassend einen Prozessor, angeordnet um einen wachstumsbezogenen Parameter für eine in den Mulden anwesende Kultur basierend auf den Bildern und vorbestimmten Kalibrierungsdaten zu ermitteln.

9. Vorrichtung nach Anspruch 8, wobei der Prozessor angeordnet ist, um vorbestimmte Kalibrierungsdaten aus mehreren vorbestimmten Kalibrierungsdaten basierend auf einem Typ einer in dem Schüttler vorhandenen Mikrotiterplatte auszuwählen.

10. Vorrichtung nach Anspruch 9, wobei der Prozessor angeordnet ist, um den Typ der Mikrotiterplatte anhand der von der Flachbett-Scaneinheit erzeugten Bilder zu bestimmen.

11. Vorrichtung nach Anspruch 9 oder 10, wobei der Prozessor ferner angeordnet ist, um einen Schüttelmodus basierend auf einem Wert des ermittelten wachstumsbezogenen Parameters anzupassen.

12. Vorrichtung nach einem der vorhergehenden Ansprüche, umfassend mehrere mit Mulden versehene Mikrotiterplatten.

13. Vorrichtung nach einem der vorhergehenden Ansprüche, wobei die Flachbett-Scaneinheit angeordnet ist, um ein sichtbares Licht zu erzeugen.

14. Vorrichtung nach einem der vorhergehenden Ansprüche 1-13, wobei die Flachbett-Scaneinheit angeordnet ist, um Licht im Bereich von 400 nm - 650 nm zu erzeugen.

15. Vorrichtung nach Anspruch 14, wenn abhängig von Anspruch 12, wobei die Mulden transparente Böden und eine weiße, graue oder schwarze Wandfarbe haben.

16. Verfahren zur Untersuchung der Homogenität von orbital geschüttelten Mulden in Mikrotiterplatten, umfassend die Schritte, in denen:

    a. eine Mikrotiterplatte mit mindestens einer Mulde, die eine darin zu züchtende Kultur enthält, orbital geschüttelt wird;
    b. das Schütteln der Mikrotiterplatte für einen Unterbrechungszeitraum automatisch unterbrochen wird, indem ein Steuersignal durch eine Steuereinheit auf eine Schüttlereinheit angewendet wird;
    c. ein zweidimensionales Bild der mindestens einen Mulde während des Unterbrechungszeitraums automatisch unter Verwendung einer Flachbett-Scaneinheit erzeugt wird;
    d. das Schütteln automatisch wiederaufgenommen wird.

17. Verfahren nach Anspruch 16, ferner umfassend den Schritt, in dem:

    e. die Bilder analysiert werden, um einen wachstumsbezogenen Parameter zu ermitteln.

**18.** Verfahren nach Anspruch 17, ferner umfassend den Schritt, in dem ein Schüttelmodus der Mikrotiterplatten basierend auf einem ermittelten Wert eines wachstumsbezogenen Parameters angepasst wird.

**19.** Computerprogrammprodukt, um den Prozessor zur Ausführung der Schritte eines Verfahrens nach Anspruch 16, 17 oder 18 zu veranlassen.

**Revendications**

**1.** Appareil (10) pour examiner l'homogénéité de cultures de cellules agitées de manière orbitale dans des plaques de micro-titration, comprenant :

- un agitateur agencé pour agiter de manière orbitale une pluralité de puits agencés dans des plaques de micro-titration (1a, 1b, 1c, ld), dans lequel

l'appareil comprend en outre une unité de balayage à plat (3a, 3b) conçue pour générer une ou plusieurs images bidimensionnelles de ladite pluralité de puits et une unité de commande agencée pour interrompre automatiquement l'agitateur pendant une période d'interruption appropriée en appliquant un signal d'interruption et pour amener l'unité de balayage à plat à générer automatiquement lesdites une ou plusieurs images au moyen du balayage desdits puits pendant ladite période d'interruption.

**2.** Appareil selon la revendication 1, dans lequel l'agitateur est conçu pour agiter lesdits puits de manière orbitale à une vitesse d'au moins 200 tr/mn.

**3.** Appareil selon la revendication 2, dans lequel l'agitateur est conçu pour recevoir les puits ayant un diamètre supérieur à 10 mm.

**4.** Appareil selon l'une quelconque des revendications précédentes, dans lequel l'agitateur est conçu pour fonctionner avec un diamètre d'agitation d'au moins 25 mm, de préférence de 50 mm à 70 mm.

**5.** Appareil selon l'une quelconque des revendications 1 à 4 précédentes, dans lequel l'unité de commande est agencée pour interrompre l'agitateur pendant la période de 5 à 60 secondes, de préférence pendant la période de 10 à 40 secondes.

**6.** Appareil selon l'une quelconque des revendications précédentes, dans lequel l'unité de balayage à plat est montée au-dessous d'une partie de fond des puits.

**7.** Appareil selon la revendication 6, dans lequel une source de lumière de l'unité de balayage à plat est agencée pour éclairer les parties de fond des puits avec un angle d'incidence d'environ 30 degrés par rapport à une verticale.

**8.** Appareil selon l'une quelconque des revendications précédentes, comprenant en outre un processeur agencé pour déterminer un paramètre associé à la croissance pour une culture présente dans lesdits puits sur la base des images et de données d'étalonnage prédéterminées.

**9.** Appareil selon la revendication 8, dans lequel le processeur est agencé pour sélectionner des données d'étalonnage prédéterminées parmi une pluralité de données d'étalonnage prédéterminées sur la base d'un type d'une plaque de micro-titration présente dans l'agitateur.

**10.** Appareil selon la revendication 9, dans lequel le processeur est agencé pour déterminer le type de la plaque de micro-titration à partir des images générées par l'unité de balayage à plat.

**11.** Appareil selon la revendication 9 ou 10, dans lequel le processeur est en outre agencé pour adapter un mode d'agitation sur la base d'une valeur du paramètre associé à la croissance déterminé.

**12.** Appareil selon l'une quelconque des revendications précédentes, comprenant une pluralité de plaques de micro-titration pourvues de puits.

**13.** Appareil selon l'une quelconque des revendications précédentes, dans lequel l'unité de balayage à plat est agencée pour générer une lumière visible.

**14.** Appareil selon l'une quelconque des revendications 1 à 13 précédentes, dans lequel l'unité de balayage à plat est agencée pour générer une lumière dans la plage de 400 nm à 650 nm.

**15.** Appareil selon la revendication 14, lorsqu'elle dépend de la revendication 12, dans lequel les puits ont des fonds transparents, et une couleur de paroi blanche, grise ou noire.

**16.** Procédé pour examiner l'homogénéité de puits agités de manière orbitale présents dans des plaques de micro-titration, comprenant les étapes :

a. d'agitation de manière orbitale d'une plaque de micro-titration comportant au moins un puits comprenant une culture conçue pour croître dans celui-ci ;
b. d'interruption automatique de l'agitation de la plaque de micro-titration pendant une période d'interruption en appliquant un signal de commande à une unité d'agitation à partir d'une unité de commande ;

c. de génération automatique d'une image bidimensionnelle dudit au moins un puits pendant ladite période d'interruption en utilisant une unité de balayage à plat,

d. de reprise automatique de ladite agitation.

17. Procédé selon la revendication 16, comprenant en outre l'étape :

   e. d'analyse desdites images pour déterminer un paramètre associé à la croissance.

18. Procédé selon la revendication 17, comprenant en outre l'étape d'adaptation d'un mode d'agitation des plaques de micro-titration sur la base d'une valeur déterminée d'un paramètre associé à la croissance.

19. Produit-programme d'ordinateur pour amener un processeur à mettre en oeuvre les étapes d'un procédé selon la revendication 16, 17 ou 18.

10

Fig.1

Fig.2

Fig.3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1730494 A
- US 20040106201 A
- US 20020168784 A
- US 20070256510 A
- US 6673532 B

**Non-patent literature cited in the description**

- **DUETZ, W.A.** Microtiter plates as mini-bioreactors: miniaturization of fermentation methods. *TRENDS in Microbiology,* 2007, vol. 15 (10), 470-475
- **MULLANEY ; DEAN.** The small angle light scattering of biological cells. *Biophysical Journal,* 1970, vol. 10, 764-772
- **KOHANOVSKY.** The dependence of the diffuse reflection coefficient of blood on the concentration of red cells. *J. Colloid and Interface Science,* 1998, vol. 208, 575-577